# EUROPÄISCHE PATENTANMELDUNG

(11) **EP 2 535 617 A1**
(43) Veröffentlichungstag der Anmeldung: **19.12.2012**
(21) Anmeldenummer: 12164971.9
(22) Anmeldetag: 20.04.2012
(51) Int. Cl.: F16H 25/22, F16H 7/02

(54) **Aktuator zur Verstellung zweier relativ zueiander bewegbarer Bauteile**

(30) Priorität: 15.06.2011 DE 102011077538
(71) Anmelder: Schaeffler Technologies AG & Co. KG, 91074 Herzogenaurach (DE)
(72) Erfinder: Kraus, Manfred, 91074 Herzogenaurach (DE)

(57) **Zusammenfassung**

Aktuator zur Verstellung zweier relativ zueinander bewegbarer Bauteile, insbesondere zur Höhenverstellung eines Fahrzeugaufbaus oder einer Hinterradlenkung eines Fahrzeugs, umfassend einen lagefest an einem Bauteil anzuordnenden Motor und ein mit dem anderen Bauteil zu verbindendes und über den Motor antreibbares Stellelement, wobei der Motor (2) mit dem Stellelement (7) über einen Riemen (16) verbunden ist, wobei der Motor (2) eine Abtriebswelle (3) mit einem daran angeordneten Riemenrad (4) aufweist und der Riemen das Riemenrad (4) und ein drehbares Stellbauteil (10) des Stellelements (7) umschlingt, und wobei der Riemen (16) zur Vergrößerung des Umschlingungswinkels (α) an dem Riemenrad (4) um wenigstens ein am Zugtrum oder Leertrum angreifendes Umlenkelement (19) läuft.

## Beschreibung

### Gebiet der Erfindung

Die Erfindung betrifft einen Aktuator zur Verstellung zweier relativ zueinander bewegbarer Bauteile, insbesondere zur Höhenverstellung eines Fahrzeugaufbaus oder einer Hinterradlenkung eines Fahrzeugs, umfassend einen lagefest an einem Bauteil anzuordnenden Motor und ein mit dem anderen Bauteil zu verbindendes und über den Motor antreibbares Stellelement.

### Hintergrund der Erfindung

Derartige Aktuatoren kommen in vielen Bereichen zum Einsatz, wo Stell- oder Positionierungsaufgaben abzuarbeiten sind, um mithin also zwei relativ zueinander bewegbare Bauteile in eine bestimmte Position relativ zueinander gebracht werden sollen. Ein Beispiel für den Einsatzbereich eines solchen Aktuators ist der Kraftfahrzeugbau, wo ein solcher Aktuator beispielsweise zur Höhenverstellung des Fahrzeugaufbaus eingesetzt werden kann. Über den Aktuator kann also der Fahrzeugaufbau relativ zum Fahrwerk angehoben oder abgesenkt werden, und so das Fahrzeugniveau verändert und je nach Bedarf eingestellt werden. Ein anderer Einsatzzweck aus dem Kraftfahrzeugbereich ist der Bereich der Hinterradverstellung, wo mittels eines Aktuators die Ausrichtung des Hinterrads um einen bestimmten Winkel variiert werden kann.

Bekannte Aktuatoren zeichnen sich durch einen Motor und ein mit dem Motor verbundenes Stellelement aus, welches Stellelement über den Motor angetrieben wird. Der Motor ist beispielsweise über das Aktuatorgehäuse, in dem er sich befindet, mit dem einen Bauteil verbunden respektive diesem lagefest zugeordnet, während das Stellelement mit seinem relativ zum Motor bewegbaren Teil am zu bewegenden Bauteil angreift. Ein Beispiel für ein solches Stellelement ist ein Kugelgewindetrieb, bei dem beispielsweise eine lagefeste Gewindemutter, die über Kugeln auf einer Gewindespindel läuft, über den Motor angetrieben wird, so dass sich bei einer Mutterrotation die Spindel axial verschieben lässt.

Bei bekannten Aktuatoren ist der Motor mit dem Aktuator über ein Ritzel bewegungsgekoppelt. Das heißt, dass auf der Abtriebswelle des Motors ein Ritzel sitzt, das mit beispielsweise der außenverzahnten Gewindemutter eines Kugelgewindetriebs kämmt, oder mit der eine Außenverzahnung aufweisenden, dann lagefesten Gewindespindel, dabei die Gewindemutter axial bewegend. Das heißt, dass zum Antrieb eine Zahnradstufe integriert ist. Diese Zahnradstufe erfordert jedoch eine genaue Ausrichtung der miteinander kämmenden Zahnräder respektive hier des Ritzels und der Verzahnung am Stellelementbauteil, wie auch eine genau Bearbeitung der miteinander kämmenden Elemente. Ferner ist eine solche Zahnradkopplung Geräusch erzeugend, was in vielen Bereichen störend ist.

### Zusammenfassung der Erfindung

Der Erfindung liegt damit das Problem zugrunde, einen Aktuator anzugeben, der demgegenüber verbessert ist.

Zur Lösung dieses Problems ist bei einem Aktuator der eingangs genannten Art erfindungsgemäß vorgesehen, dass der Motor mit dem Stellelement über einen Riemen verbunden ist, wobei der Motor eine Abtriebswelle mit einem daran angeordneten Riemenrad aufweist und der Riemen das Riemenrad und ein drehbares Stellbauteil des Stellelements umschlingt, und wobei der Riemen zur Vergrößerung des Umschlingungswinkels an der Riemenscheibe um wenigstens ein am Zugtrum oder Leertrum angreifendes Umlenkelement läuft.

Bei dem erfindungsgemäßen Aktuator, der eine in sich geschlossene, eigenständige Baugruppe respektive ein eigenständiges Bauteil darstellt, ist ein Riementrieb zur Bewegungskopplung von Motor und Stellelement vorgesehen. Am Motor ist abtriebswellenseitig eine Riemenscheibe angeordnet, über die ein Riemen läuft, der des Weiteren das anzutreibende Stellbauteil des Stellelements umschlingt, also beispielsweise die Gewindemutter des beschriebenen Kugelgewindetriebs, der das Stellelement bildet. Arbeitet der Motor und dreht sich die Riemenscheibe, ergibt sich zwangsläufig über den Riementrieb auch eine Bewegung des Stellbauteils und damit die gewünschte Verstellung.

Um eine möglichst große Übersetzung vom kleinen Riemenrad auf das im Durchmesser deutlich größere Stellbauteil zu ermöglichen ist mit besonderem Vorteil der Riemen um wenigstens ein Umlenkelement geführt, welches derart positioniert ist beziehungsweise über welches der Riemen derart geführt ist, dass der Umschlingungswinkel der Riemenscheibe vergrößert wird, verglichen zur Situation ohne integriertem Umlenkelement. Je kleiner die Riemenscheibe im Verhältnis zum Stellelementbauteil ist respektive je näher sie daran positioniert ist, umso kleiner ist der Umschlingungswinkel der Riemenscheibe, das heißt, der Winkelabschnitt, längs welchem der Riemen an der Riemenscheibe angreift, ist klein. Hieraus resultiert nur eine geringe Eingriffs- oder Angriffsstrecke, die nicht sicherstellt, dass der Riemen nicht überspringt oder durchrutscht. Kommt es zum Überspringen oder Durchrutschen, so ist zumindest temporär der Stellbetrieb nicht möglich.

Wird jedoch der Riemen erfindungsgemäß über das wenigstens eine Umlenkelement geführt, so kann ein Übersetzungsverhältnis von > 1:3 (ein solches kann günstigstenfalls ohne Umlenkelement erreicht werden) realisiert werden, bei gleichzeitiger Möglichkeit zur Übertragung hoher Stellkräfte. Dies wiederum führt dazu, eine relativ kleine Riemenscheibe verglichen zum relativ großen Stellelementbauteil einsetzen zu können.

Bei dem erfindungsgemäßen Aktuator ist infolge der Integration des Riementriebs nebst Umlenkelement folglich ein sehr effizienter, gleichzeitig aber auch geräuscharmer Stellbetrieb möglich, wobei der Aktuator auch mit integriertem Riemen als geschlossene Baueinheit hergestellt werden kann.

Um den Umschlingungswinkel an der Riemenscheibe noch weiter zu vergrößern kann erfindungsgemäß der Riemen um zwei Umlenkelemente laufen, wobei ein Umlenkelement am Zugtrum und das andere am Leertrum angreift. Die beiden Umlenkelemente liegen also einander gegenüber, eines jedoch vor und eines hinter der Riemenscheibe, worüber sichergestellt wird, dass der Riemen noch weiter um die Riemenscheibe umläuft. Zum Ausgleich des Polygoneffekts des Riemens kann ein Umlenkelement angefedert sein.

Die erfindungsgemäße Integration eines Riementriebs ermöglicht es ferner, in den Aktuator einen zweiten Motor mit einer eigenen Abtriebswelle und einem eigenen daran angeordneten Riemenrad vorzusehen, über welches Riemenrad der Riemen ebenfalls läuft, wobei der Riemen mit seinem dortigen Zugtrum oder Leertrum um wenigstens ein weiteres Umlenkelement läuft. Diese Erfindungsausgestaltung ermöglicht also die Integration zweier Motoren im Aktuator respektive im Aktuatorgehäuse, die synchron arbeiten und mit denen auch hohe Kräfte erforderliche Stellaufgaben abgearbeitet werden können. Gekoppelt werden die beiden Motoren und das Stellelement über einen gemeinsamen Riemen, der über die beiden Riemenscheiben sowie über das bewegliche Stellelementbauteil läuft. Beide Riemenscheiben sind, nachdem jeder Riemenscheibe wenigstens ein Umlenkelement zugeordnet ist, stärker umschlungen als ohne Umlenkelement, was wiederum der Kraftübertragung dienlich ist und ein Überspringen oder Durchrutschen vermeidet.

Die zwei Motoren sind in unterschiedlicher Weise integrierbar respektive relativ zueinander beziehungsweise relativ zum Stellelement anordbar. Gemäß einer ersten Erfindungsalternative kann der zweite Motor dem ersten Motor gegenüberliegend angeordnet sein und sich das vom Riemen beidseits umschlungene Stellbauteil zwischen den Motoren befinden, wobei gegebenenfalls der Riemen mit dem Zugtrum und dem Leertrum, die dem zweiten Motor zugeordnet sind, um jeweils ein Umlenkelement läuft. Bei dieser Erfindungsausgestaltung liegen also die beiden Motoren und das Stellelement quasi linear nebeneinander, wobei jeder Riemenscheibe wenigstens ein Umlenkelement, bevorzugt jeweils zwei Umlenkelemente zugeordnet sind, um den Umschlingungswinkel an jeder Riemenscheibe möglichst groß auszulegen. Das Stellbauteil ist an zwei gegeneinander gegenüberliegenden Seiten vom Riemen umschlungen, es findet also ein beidseitiger Riemenangriff statt.

Alternativ hierzu kann bei einer nicht einander gegenüberliegenden Anordnung der Motoren das Stellbauteil nur einseitig umschlungen sein und der Riemen an der anderen Seite vom ersten Motor über wenigstens ein Umlenkelement zum zweiten Motor laufen. Bei dieser Erfindungsausgestaltung ist beispielsweise eine 90°-Anordnung der beiden Motoren relativ zum Stellelement vorgesehen. Der Riemen läuft vom ersten Motor zum Stellelementbauteil und von diesem, das um ca. 180° oder mehr umschlungen ist, zum zweiten Motor, von wo aus der Riemen wieder zum ersten Motor zurückläuft. In diesem Abschnitt ist wenigstens ein Umlenkelement integriert, um den Umschlingungswinkel an beiden Riemenscheiben zu vergrößern, wobei natürlich auch zwei Umlenkelemente in diesem Bereich vorgesehen sein können, wie auch den anderen Riemenscheibenseiten jeweils ein weiteres Umlenkelement zugeordnet sein kann.

Ein Umlenkelement ist bevorzugt eine Umlenkrolle, die mit ihrer Drehachse in geeigneter Position an einer Trägerplatte oder dem Aktuatorgehäuse etc. befestigt ist. Alternativ zur Umlenkrolle ist auch der Einsatz einer Umlenkschiene denkbar, über die der Riemen läuft.

Um etwaige sich im Betrieb ergebende Längungen des Riemens kompensieren zu können und folglich die Riemenspannung aufrecht halten zu können kann das oder wenigstens ein Umlenkelement gegen den Riemen angefedert sein. Das heißt, dass ein Umlenkelement im Riementrieb unter Vorspannung gegen den Riemen anliegt. Längt sich der Riemen, so wird die Längung durch das nachgeführt Umlenkelement ausgeglichen, die Riemenspannung bleibt gleich.

Zur Einstellung der Grundspannung im Riementrieb ist es denkbar, bei Verwendung wenigstens einer Umlenkrolle diese als Exzenterrolle auszuführen, das heißt, dass die Rolle um eine exzentrische Drehachse verschwenkt werden kann, so dass sich ihre Relativlage zum Riemen einstellen lässt, worüber die Riemenspannung justiert werden kann.

Wie bereits beschrieben, kann das Stellelement bevorzugt als Kugelgewindetrieb ausgeführt sein, umfassend eine Gewindespindel und eine auf dieser kugelgelagerte Gewindemutter, wobei entweder die Gewindemutter oder die Gewindespindel das angetriebene Stellbauteil ist. Denkbar ist auch ein Trapezgewindetrieb. Andere Stellelemente in Form von Rotation-Translation-Getriebe oder von Rotation-Rotation-Getriebe sind jedoch gleichermaßen denkbar, solange sie über einen Riementrieb mit dem Motor koppelbar sind.

Der Riemen selbst ist bevorzugt ein Zahnriemen, das heißt, dass damit auch das Riemenrad ein Zahnriemenrad ist und auch das Stellelementbauteil eine entsprechende Außenverzahnung aufweist. Alternativ kann aber auch ein Poly-V-Riemen oder ein Flachriemen verwendet werden, bei entsprechender Ausgestaltung des Riemenabschnitts des Stellelementbauteils.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine Aufsicht auf einen erfindungsgemäßen Aktuator,
- Figur 2: eine Schnittansicht durch den Aktuator aus Figur 1,
- Figur 3: eine Perspektivteilansicht des Aktuators aus Figur 1,
- Figur 4: eine Prinzipdarstellung einer weiteren Ausgestaltung eines erfindungsgemäßen Aktuators mit zwei Motoren gemäß einer ersten Alternative, und
- Figur 5: eine Prinzipdarstellung einer Ausgestaltung eines erfindungsgemäßen Aktuators mit zwei Motoren gemäß einer zweiten Alternative.

### Ausführliche Beschreibung der Zeichnung

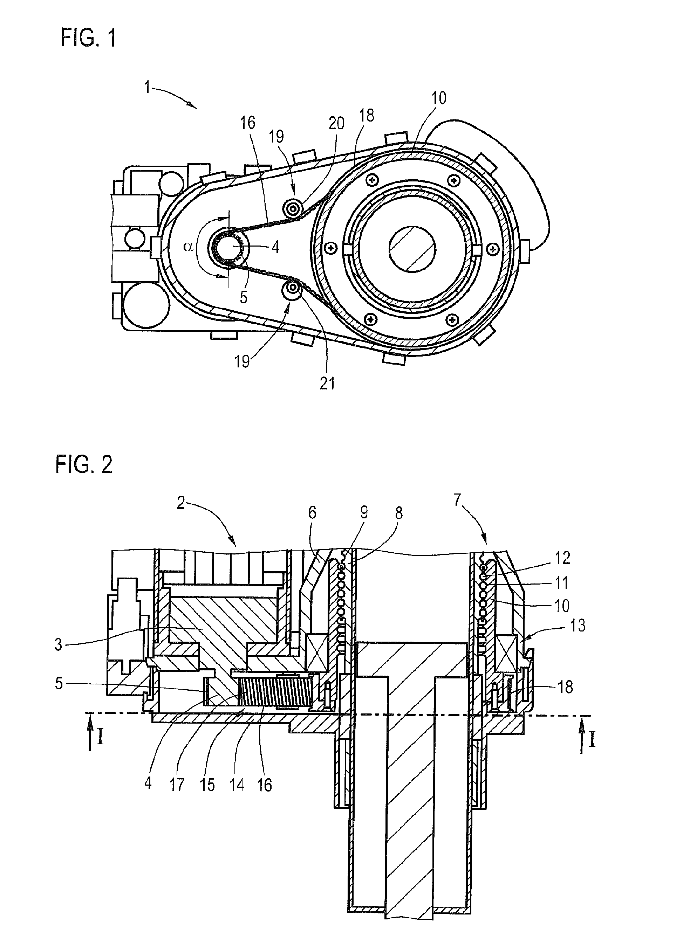

Figur 1 zeigt einen erfindungsgemäßen Aktuator 1, der eine vorfertigbare, komplette Baueinheit darstellt. Er umfasst einen Motor 2 mit einer Abtriebswelle 3, an der ein Riemenrad 4 anliegt, das eine Außenverzahnung 5 aufweist. Der Motor 2 ist in oder an einem Gehäuse 6 des Aktuators 1 angeordnet.

Der Aktuator 1 umfasst ferner ein Stellelement 7, das hier als Kugelgewindetrieb umfassend eine Gewindespindel 8 mit einem Außengewinde 9 und eine auf dieser laufende Gewindemutter 10 mit einem Innengewinde 11, zwischen welchen Gewinden 9, 11 Kugeln 12 laufen, ausgeführt ist. Die Gewindemutter 10 ist lagefest und über ein Lagermittel 13 drehgelagert. Bei einer Drehung der Gewindemutter 10 wird die Gewindespindel 8 axial bewegt, hier also in das beziehungsweise aus dem Gehäuse 6, das an dieser Seite über einen Gehäusedeckel 14 geschlossen ist, bewegt.

Um dies zu ermöglichen ist ein Riementrieb 15 umfassend einen Zahnriemen 16 vorgesehen, der um das Riemenrad 4 läuft und mit seiner Innenverzahnung 17 in die Riemenradverzahnung 5 eingreift. Dieser Riemen 16 läuft des Weiteren um die Gewindemutter 10, die hierzu einen Außenverzahnungsabschnitt 18 aufweist, der vom Riemen 16 umschlungen ist. Eine Drehung des Riemenrads 4 führt folglich zu einer Drehung der Gewindemutter 10 und daraus resultierend zu einer Axialbewegung der Gewindespindel 8, je nach Drehrichtung der Gewindemutter 10 in oder aus dem Gehäuse.

Nachdem in der Montagestellung der Motor 2 respektive das Aktuatorgehäuse 6 lagefest am einen Bauteil angeordnet ist, während bei dem beschriebenen Ausführungsbeispiel die Gewindespindel 8 direkt oder indirekt mit einem zweiten Bauteil, das relativ zum ersten Bauteil zu verschieben ist, verbunden ist, kommt es folglich zwangsläufig infolge der bei Motorbetrieb gegebenen Axialbewegung der Gewindespindel zu einer Relativbewegung der beiden über den Aktuator 1 gekoppelten Bauteile.

Wie beschrieben läuft der Riemen 16 um die Riemenscheibe 4 sowie den Außenverzahnungsabschnitt 18 der Gewindemutter 10. Um die Übertragung hinreichend hoher Kräfte respektive Momente vom Riemenrad 4 auf die Gewindemutter 10 zu ermöglichen, und gleichzeitig auch große Übersetzungen von > 1:3 zu ermöglichen, läuft der Riemen 16 im gezeigten Beispiel über zwei Umlenkelemente 19, siehe Figur 1, die eine Aufsicht auf den Aktuator mit entferntem Gehäusedeckel 14 zeigt. Die beiden Umlenkelemente 19 sind als Umlenkrollen 20, 21 ausgeführt, wobei die Umlenkrolle 20 eine zentrische Umlenkrolle ist, während die Umlenkrolle 21 eine Exzenterrolle ist. Über die Umlenkrolle 21 kann die Spannung des Riemens eingestellt werden. Denkbar ist es, eine der Rollen auch anzufedern, sie also unter Federspannung gegen den Riemen zu drücken, um etwaige Längungen des Riemens im Betrieb kompensieren zu können.

Infolge der Integration der beiden Umlenkrollen 20, 21 läuft folglich der Riemen 16 von dem Riemenrad 4 nicht direkt zur Gewindemutter 10 respektive von der Gewindemutter 10 zum Riemenrad 4, vielmehr wird er derart über die Umlenkrollen 20, 21 umgelenkt, dass sich, verglichen mit dem direkten Riemenweg vom Riemenrad 4 zur Gewindemutter 10, ein größerer Umschlingungswinkel an dem Riemenrad 4 ergibt. Im gezeigten Beispiel ist der Umschlingungswinkel α schematisch eingezeichnet, ersichtlich liegt der Riemen 16 um ca. 180° um das Riemenrad 4 an. Das heißt, dass die Angriffsfläche respektive der Verzahnungseingriff großflächig ist, deutlich größer als ohne Integration der Umlenkrollen 20, 21. Hieraus resultiert zum einen, dass eine größere Übersetzung vom Riemenrad 4 zur Gewindemutter 10 möglich ist. Üblicherweise sind ohne Integration der erfindungsgemäßen Umlenkrollen nur Übersetzungen bis maximal 1:3 möglich. Das Übersetzungsverhältnis kann deutlich vergrößert werden, wenn die Umlenkrollen integriert werden, wobei der Umschlingungswinkel, ausgehend von dem in Figur 1 gezeigten Ausführungsbeispiel, noch weiter vergrößert werden kann, je näher die Umlenkrollen 20, 21 zueinander positioniert werden. Durch den vergrößerten Umschlingungswinkel kann des Weiteren ein Überspringen oder Durchrutschen des Riemens bei hohem Drehmoment der Abtriebswelle 3 und damit des Riemenrades 4 vermieden werden.

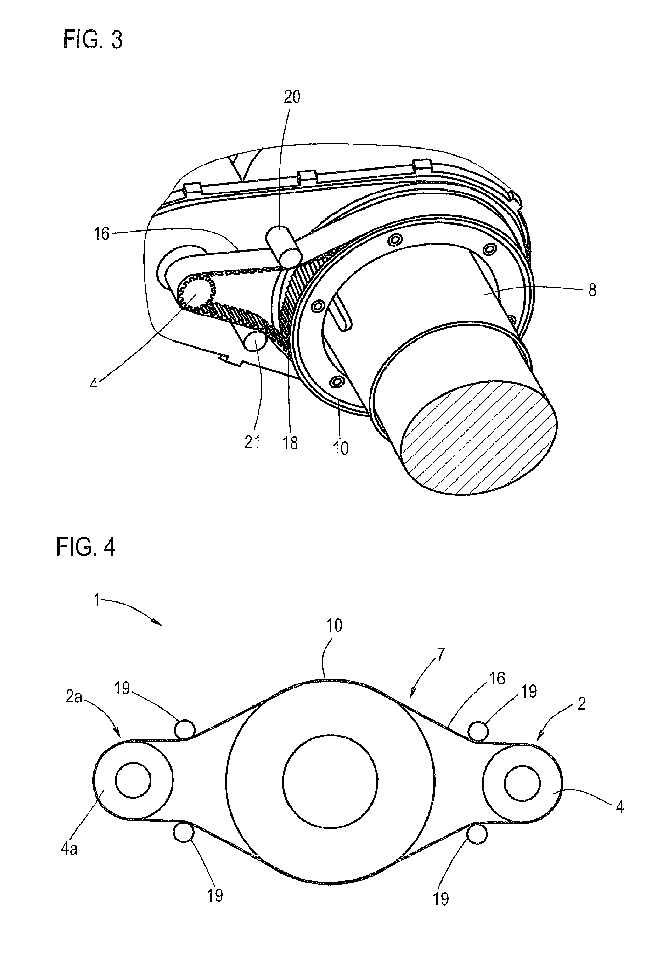

Figur 4 zeigt eine Prinzipdarstellung einer weiteren Ausgestaltung eines erfindungsgemäßen Aktuators. Vorgesehen ist in dieser reinen schematischen Darstellung ein erster Motor 2 mit einem Riemenrad 4, ein Stellelement 7 mit einem anzutreibenden Stellbauteil beispielsweise in Form der bereits beschriebenen Gewindemutter 10, sowie ein zweiter Motor 2a nebst Riemenrad 4a. Die beiden Motoren 2, 2a und das Stellelement 7 sind linear benachbart nebeneinander angeordnet, das heißt, dass sich das Stellelement 7 zwischen den beiden Motoren 2, 2a befindet. Die Bewegungskopplung erfolgt wiederum über einen Riemen 16, der sowohl die beiden Riemenräder 4, 4a als auch die Gewindemutter 10 umschlingt. Der Riemen 16 wird hier also von beiden Motoren 2, 2a angetrieben. Jedem Riemenrad 4, 4a sind im gezeigten Beispiel wiederum zwei Umlenkelemente 19 zugeordnet, bei denen es sich beispielsweise wiederum um Umlenkrollen 20 beziehungsweise Exzenterrollen 21 handeln kann. Alternativ zur Verwendung von Umlenkrollen wäre auch die Verwendung von Umlenkschienen denkbar. Wiederum kann durch die Integration der Umlenkelemente 19 in den Riementrieb der Umschlingungswinkel an den Riemenscheiben 4, 4a vergrößert werden, verbunden mit der Möglichkeit größere Übersetzungsverhältnisse wählen wie auch hohe Kräfte übertragen zu können.

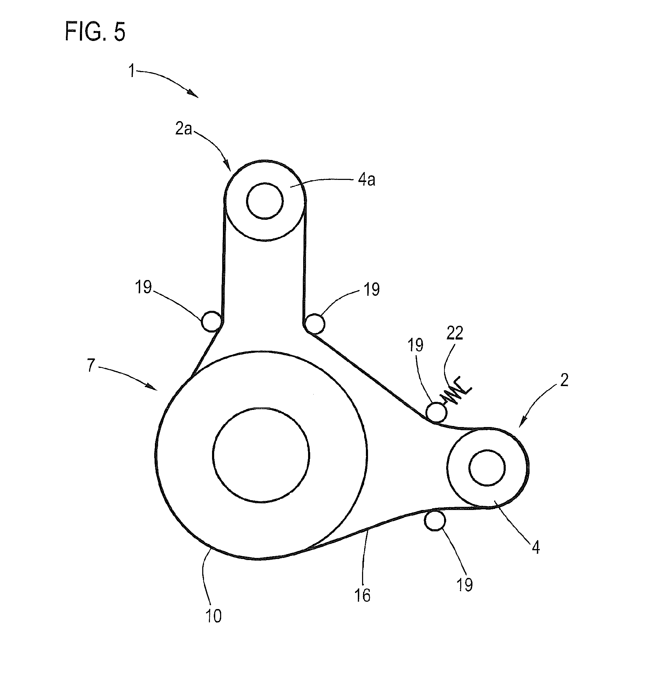

Eine weitere erfindungsgemäße Ausgestaltung eines Aktuators 1 zeigt Figur 5. Wiederum sind hier zwei Motoren 2, 2a vorgesehen, jeweils mit einem Riemenrad 4, 4a, die wiederum von einem Riemen 16 umschlungen sind. Vorgesehen ist ebenfalls ein Stellelement 7, beispielsweise wiederum umfassend eine Gewindespindel 10 als Teil eines Kugelgewindetriebs. Auch hier ist die Gewindemutter 10 vom Riemen 16 umschlungen.

Hier sind jedoch die beiden Motoren 2, 2a und das Stellelement 7 quasi in einer 90°-Anordnung (verglichen zur 180°-Anordnung aus Figur 4) angeordnet.

Der Riemen läuft hier vom Riemenrad 4 direkt zur Gewindemutter 10, umschlingt diese in einem großen Winkelbereich und läuft sodann zum Riemenrad 4a, von wo aus der Riemen 16 direkt wieder zum Riemenrad 4 läuft. In diesem Riemenabschnitt sind im gezeigten Beispiel wiederum zwei Umlenkelemente 19 integriert, wobei eines der Umlenkelemente 19, wie angedeutet, über ein Federelement 22 angefedert ist, um die Riemenspannung auch bei Längung des Riemens 16 aufrechterhalten zu können. Den Riemenrädern 4, 4a zugeordnet sind ferner weitere Umlenkelemente 19 im jeweils anderen Riementrum, die den Riemen ebenfalls umlenken, so dass sich wiederum an den beiden Riemenrädern 4, 4a ein großer Umschlingungswinkel ausbildet.

### Bezugszahlenliste

- 1: Aktuator
- 2: Motor
- 2a: Motor
- 3: Abtriebswelle
- 4: Riemenrad
- 4a: Riemenrad
- 5: Außenverzahnung
- 6: Gehäuse
- 7: Stellelement
- 8: Gewindespindel
- 9: Außengewinde
- 10: Gewindemutter
- 11: Innengewinde
- 12: Kugeln
- 13: Lagermittel
- 14: Gehäusedeckel
- 15: Riementrieb
- 16: Riemen
- 17: Innenverzahnung
- 18: Außenverzahnungsabschnitt
- 19: Umlenkelemente
- 20: Umlenkrolle
- 21: Umlenkrolle
- 22: Federelement

## Patentansprüche

1. Aktuator zur Verstellung zweier relativ zueinander bewegbarer Bauteile, umfassend einen lagefest an einem Bauteil anzuordnenden Motor und ein mit dem anderen Bauteil zu verbindendes und über den Motor antreibbares Stellelement, **dadurch gekennzeichnet, dass** der Motor (2) mit dem Stellelement (7) über einen Riemen (16) verbunden ist, wobei der Motor (2) eine Abtriebswelle (3) mit einem daran angeordneten Riemenrad (4) aufweist und der Riemen das Riemenrad (4) und ein drehbares Stellbauteil (10) des Stellelements (7) umschlingt, und wobei der Riemen (16) zur Vergrößerung des Umschlingungswinkels (α) an dem Riemenrad (4) um wenigstens ein am Zugtrum oder Leertrum angreifendes Umlenkelement (19) läuft.

2. Aktuator nach Anspruch 1, **dadurch gekennzeichnet, dass** der Riemen (16) um zwei Umlenkelemente (19) läuft, wobei ein am Zugtrum und das andere am Leertrum angreift.

3. Aktuator nach Anspruch 1 oder 2, **dadurch gekennzeichnet, dass** ein zweiter Motor (2a) mit einer Abtriebswelle mit einem daran angeordneten Riemenrad (4a) vorgesehen ist, über welches Riemenrad (4a) der Riemen (16) ebenfalls läuft, wobei der Riemen (16) mit seinem dortigen Zugtrum oder Leertrum um wenigstens ein weiteres Umlenkelement (19) läuft.

4. Aktuator nach Anspruch 3, **dadurch gekennzeichnet, dass** der zweite Motor (2a) dem ersten Motor (2) gegenüberliegend angeordnet ist und sich das vom Riemen (16) beidseits umschlungene Stellbauteil (10) zwischen den Motoren (2, 2a) befindet, wobei gegebenenfalls der Riemen (16) mit dem Zugtrum und dem Leertrum, die dem zweiten Motor (2a) zugeordnet sind, um jeweils ein Umlenkelement (19) läuft.

5. Aktuator nach Anspruch 3, **dadurch gekennzeichnet, dass** bei einer nicht einander gegenüberliegenden Anordnung der Motoren (2, 2a) das Stellbauteil (10) nur einseitig umschlungen ist und der Riemen (16) an der anderen Seite vom ersten Motor (2) über wenigstens ein Umlenkelement (19) zum zweiten Motor (2a) läuft.

6. Aktuator nach einem der vorangehenden Ansprüche, **dadurch gekennzeichnet, dass** ein Umlenkelement (19) eine Umlenkrolle (20, 21) oder eine Umlenkschiene ist.

7. Aktuator nach einem der vorangehenden Ansprüche, **dadurch gekennzeichnet, dass** das oder wenigstens ein Umlenkelement (19) gegen den Riemen (16) angefedert ist.

8. Aktuator nach Anspruch 6, **dadurch gekennzeichnet, dass** wenigstens eine Umlenkrolle eine zum Spannen des Riemens verwendete Exzenterrolle (21) ist.

9. Aktuator nach einem der vorangehenden Ansprüche, **dadurch gekennzeichnet, dass** das Stellelement (7) ein Trapezgewindetrieb oder ein Kugelgewindetrieb mit einer Gewindespindel (8) und einer auf dieser kugelgelagerten Gewindemutter (10) ist.

10. Aktuator nach einem der vorangehenden Ansprüche, **dadurch gekennzeichnet, dass** der Riemen (16) ein Zahnriemen, ein Poly-V-Riemen oder ein Flachriemen ist.
